(19) Europäisches Patentamt / European Patent Office / Office européen des brevets

(11) **EP 3 043 652 B1**

(12) **EUROPEAN PATENT SPECIFICATION**

(45) Date of publication and mention
of the grant of the patent:
**28.03.2018 Bulletin 2018/13**

(51) Int Cl.:
*A23G 1/54* *(2006.01)*          *A23G 3/34* *(2006.01)*
*A23G 3/02* *(2006.01)*          *A23G 3/20* *(2006.01)*

(21) Application number: **14772438.9**

(22) Date of filing: **30.07.2014**

(86) International application number:
**PCT/IB2014/063559**

(87) International publication number:
**WO 2015/036878 (19.03.2015 Gazette 2015/11)**

(54) **PROCESS FOR THE PREPARATION OF A CONFECTIONERY PRODUCT**

VERFAHREN ZUR HERSTELLUNG EINER SÜSSWARE

PROCÉDÉ DE PRÉPARATION DE PRODUIT DE CONFISERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.09.2013 GB 201316253**

(43) Date of publication of application:
**20.07.2016 Bulletin 2016/29**

(73) Proprietor: **Kraft Foods R & D, Inc.
Deerfield, IL 60015 (US)**

(72) Inventor: **SMITH, Beccy
Birmingham
West Midlands B30 2LU (GB)**

(74) Representative: **Ward, David Ian
Marks & Clerk LLP
Alpha Tower
Suffolk Street
Queensway
Birmingham B1 1TT (GB)**

(56) References cited:
| | |
|---|---|
| EP-A1- 1 064 852 | EP-A2- 1 769 684 |
| WO-A1-00/41929 | WO-A1-2005/077547 |
| WO-A2-02/49447 | WO-A2-2010/102716 |
| GB-A- 357 357 | GB-A- 2 026 378 |
| GB-A- 2 060 084 | US-A- 4 262 709 |
| US-A- 5 102 599 | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 3 043 652 B1**

**Description**

The present invention relates to a process for preparing a confectionery product, especially a confectionery product comprising a chocolate shell having a filling therein.

Confectionery products comprising a chocolate shell having a filling therein are well known. Often the filling contrasts with the chocolate shell in terms of taste or texture e.g. caramel, fondant or praline.

Some fillings, such as viscous caramels, suffer from tailing when being deposited into chocolate shells. Ideally the filling would be level within the shell so that a backing chocolate can be applied to seal the unit. Instead the filling extends upwardly in the form of a tail or string. The tail or string then falls downwards and drapes over the edge of the shell. This means that the backing chocolate cannot properly seal the filling within the shell. This can lead to units sticking to each other and packaging and also means that the filling is at risk of drying out, thereby reducing shelf stability.

In some cases caramel fillings are heated to at least 50°C to prevent the problem, which is known as "tailing". Although the elevated temperature reduces the viscosity of the caramel, allowing it to flow more easily, there is then a risk that that the chocolate shell will melt.

US5102599 describes the problem of viscous materials forming tails and proposes the use of a rotating blade which passes beneath an extruder nozzle. WO00/41929 describes a cut off device for cutting a fluid material comprising a rotating whip which rotates at 8000rpm or more. WO02/49447 explains that past attempts to reduce tailing have consisted in physically cutting the tail, but such solutions are said to be complicated, costly to implement and of unproven efficacy. WO02/49447 describes a process for depositing a viscous filling material into a shell by applying pressure to the filling by a pressure means at a velocity that increases during the stroke of the pressure means. The discharge is said to be stopped by a valve means actuating a cut-off motion of at least 400mm per second.

WO2005/077547 describes a depositor for plastics materials and polymers, which comprises an IR heater configured to heat the polymer tails by pulses of IR.

GB2026378 describes a depositor for confectionery such as toffee, wherein the tail is cut by a blast of heated compressed air.

The present invention seeks to mitigate one or more problems of the prior art processes.

In a first aspect of the present invention there is provided a process for the preparation of a confectionery product as described in claim 1.

It will be understood that the heat need only be applied to a small amount of the viscous confectionery material. Therefore this is much more efficient than prior art methods where the bulk viscous material is heated and subsequently cooled.

The portion of the tail that is subjected to the heat increases in temperature. Since viscosity is generally inversely related to temperature, an increase in temperature decreases the viscosity of the portion of the tail that is subjected to the heat. The weight of the mass of confectionery material pulls down on the tail and the reduction in viscosity allows the weight to break the tail. In some cases, the nozzle will also have a suck-back which will therefore pull the tail in the upward direction. The increase in temperature is dependent on the amount of heat that is applied, the amount of the viscous confectionery material in the portion of the tail and the specific heat capacity of the viscous confectionery material.

There is no benefit to raising the temperature of the mass after deposition; this would be a waste of energy. In one series of embodiments the mass of confectionery increases its temperature after deposition by less than 3, 2 or 1°C. In one embodiment the mass maintains the temperature at which it is deposited or cools to below the deposition temperature.

In one embodiment the viscous confectionery material has a specific heat capacity of at least 1500 J /kg.K. This means at least 1500J of energy is required to heat a kilogram of the material by one Kelvin. In a particular embodiment viscous confectionery material has a specific heat capacity of from 2000 to 2500 J/kg.K.

In one embodiment the portion of the tail which is subjected to heat is less than 5, 4, 3, 2, 1, 0.5, 0.3 or 0.1wt% of the viscous confectionery material in the resulting product.

The mass and the tail are formed from the same viscous confectionery mass such that the exact boundary between the mass and the tail may be difficult to define. However, the concept of tailing is well understood in the field of confectionery and the skilled person would understand the difference between the mass and the tail.

In one series of embodiments the mass constitutes at least 95, 96, 97, 98 or 99wt% of the viscous confectionery material. In one series of embodiments the tail constitutes less than 5, 4, 3, 2 or 1wt% of the viscous confectionery material.

In one embodiment the tail has a length (the distance from the nozzle to the mass) of less than 30, 25, 20, 15, 10, 8, 5 or 3cm. In one series of embodiments the tail has a length of at least 0.5, 1, 2, 3, 4, 5, 10, 15, 20 or 25cm. In a particular embodiment the tail has a length of from 2 to 20cm or from 5 to 15cm.

In one embodiment the nozzle is moved relative to the mass after the confectionery material is deposited. For example, lifting tables are known which allow material to be deposited when the nozzle is close to the surface and subsequently move the nozzle away from the surface. This means that the tail is stretched, and may even break.

It will be understood that reference to the length of the tail is to the length of the tail while it is subject to the

2

heat in accordance with the invention. If the tail has a variable length during heating, the maximum length should be considered.

In one series of embodiments the portion of the tail (which is subjected to heat) has a length of less than 20, 10, 5, 4, 3, 2, 1, 0.5 or 0.3mm. In one series of embodiments the portion of the tail has a length of at least 0.1, 0.2, 0.3, 0.5, 1, 2, 5 or 10mm. In a particular embodiment the portion of the tail has a length of from 0.5 to 2mm. It is beneficial to focus the heat on as small an area of the tail as possible so as to minimise the amount of the heat required to break the tail.

In one embodiment the tail has a length of 20cm and a portion of the tail having a length of 2cm is subjected to heat i.e. the portion forms 10% of the length of the tail. In one series of embodiments the portion forms at least 0.5, 1, 2, 3, 5, 10, 20, 30, 40, 50, 60, 70, 80 or 90% of the length of the tail. In one series of embodiments the portion is less than 80, 70, 60, 50, 40, 30, 20, 15, 10, 5, 4, 3, 2 or 1% of the length of the tail. In a particular embodiment the portion forms from 1 to 5% of the length of the tail.

In one series of embodiments the mass has a diameter (measured perpendicular to the direction of deposition) of at least 10, 15, 20, 25 or 30mm. In one series of embodiments the mass has a diameter of less than 45, 35, 25, 20 or 15mm. If the diameter is not uniform, a mean value can be taken.

In one series of embodiments the tail has a diameter (measured perpendicular to the direction of deposition and its length) of less than 5, 4, 3, 2, 1 or 0.5mm. In one series of embodiments the tail has a diameter of at least 0.2, 0.5, 1, 2, 3, 4 or 5mm. In one series of embodiments the tail has a diameter which is less than 3, 2, 1, 0.5 or 0.1% of the diameter of mass.

In one embodiment the portion of the tail which is subjected to the heat has a diameter (measured perpendicular to the length) of less than 5, 4, 3, 2, 1 or 0.5mm. In one series of embodiments the portion of the tail has a diameter of at least 0.2, 0.5, 1, 2, 3, 4 or 5mm. If the diameter is not uniform, a mean value can be taken.

The heat can be applied to various locations on the tail. In one embodiment the portion of the tail that is subjected to the heat is located equidistant between the nozzle and the mass. In another embodiment the portion of the tail that is subjected to the heat is located closer to the nozzle than the mass. In a further embodiment the portion of the tail that is subjected to the heat is located closer to the mass than the nozzle. If the portion of the tail that is subjected to heat is located close to the mass, the tail will break close to the mass. This is beneficial when depositing into a chocolate shell since the tail is more likely to fall within the shell.

In one series of embodiments the viscous confectionery material has a temperature of less than 60, 55, 50, 45, 40, 35, 35 or 25°C when it is deposited from the nozzle (known as the deposition temperature). In one series of embodiments the viscous confectionery material has a temperature of at least 10, 15, 20, 25 or 30°C when it is deposited. In a particular embodiment, the viscous confectionery material has a temperature from 25 to 35°C when it is deposited. In conventional processes for depositing viscous materials, the temperature is usually much higher to prevent tailing.

In one series of embodiments the portion of the tail is subjected to heat to increase its temperature to at least 50, 55, 60, 65 or 70°C. In one series of embodiments the portion of the tail is subjected to heat to increase its temperature to no more than 90, 80, 70, 60 or 55°C. In a particular embodiment, the portion of the tail is subjected to heat to increase its temperature to from 50 to 75°C.

In one series of embodiments the portion of the tail is subjected to heat to increase its temperature by at least 10, 15, 20, 25, 30 or 35°C (relative to the deposition temperature). In one series of embodiments the portion of the tail is subjected to heat to increase its temperature by less than 40, 35, 30, 25, 20, 15 or 10°C. In a particular embodiment, the portion of the tail is subjected to heat to increase its temperature by 15 to 25°C or approximately 20°C.

In one embodiment the portion of the tail is subjected to heat to reduce its viscosity by at least 5, 10, 20, 30, 40, 50, 60, 70, 80 or 90%. When comparing the viscosity values, it is important to use the same method to measure the viscosity before and after heating. It may not be feasible to calculate the viscosity directly during the process. If so, the temperature can be measured directly and the change of viscosity determined by reference to standards.

Viscosity can be measured using a rotational viscometer (or rheometer) such as the Bohlin, Brookfield or Haake viscometer. In one embodiment viscosity is measured using a Bohlin rheometer.

In one embodiment viscosity is measured by melting a sample, transferring the sample to a concentric cylinder system of rotational viscometer and pre-shearing to bring the sample to equilibrium and to ensure a uniform mass and temperature; the sample is then subjected to defined shear rates and the shear stress is measured; the apparent viscosity is calculated from the shear stress at given shear rates.

In one embodiment the portion of the tail is subjected to heat to reduce its viscosity to less than 200, 100, 50, 40, 30, 20, 10, 5 or 2Pa.s.

The portion of the tail is subjected to heat in the form of infrared radiation from an infrared source, such as an infrared heater or an infrared laser. Infrared radiation (IR) is part of the electromagnetic spectrum and has a wavelength which is longer than visible light and shorter than microwaves. The Oxford English Reference Dictionary (1995) describes infrared radiation as spanning wavelengths from about 800nm to 1mm. An advantage of IR is that no contact or medium is required to transfer energy.

In one embodiment the infrared source is located such that it emits radiation onto the tail only (and not onto the mass).

It will be understood that the portion of the tail is subjected to infrared radiation of greater intensity than is present naturally (background radiation).

In one embodiment the portion of the tail is subjected to infrared radiation having a peak wavelength of from 800nm to 1mm. In one series of embodiments the infrared radiation has a peak wavelength of from 800 to 1400nm, from 1400 to 3000nm or from 3000nm to 1mm. These ranges correspond to short, medium and far infrared respectively.

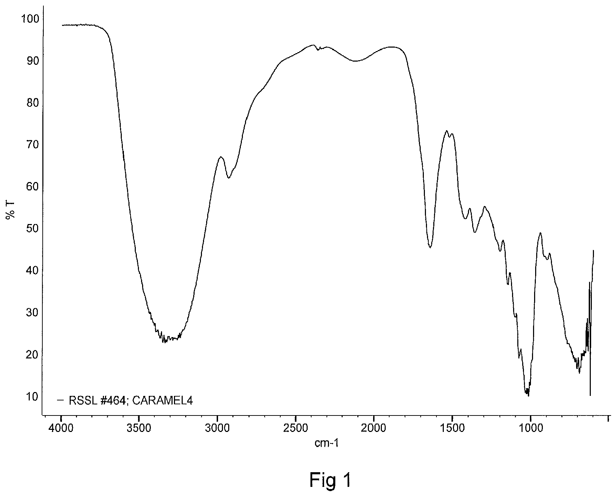

Figure 1 shows a reference FT-IR (Fourier transform Infrared Spectroscopy) absorption spectrum of a conventional caramel. It can be seen that the peak absorption is in the range of 4000 to 2500cm-1 (wave number), the peak itself being at approximately 3300cm-1. Wave number is the number of wavelengths per unit distance:

$$\text{Wave number} = 1 / \text{wavelength}$$

Therefore 4000cm-1 = 2500nm; 3500cm-1 = 2857nm; 3300cm-1 = 3030nm; 3100cm-1 = 3226nm; and 2500cm-1 = 4000nm.

In one series of embodiments the portion of tail is subjected to infrared radiation having a peak wavelength of from 2500 to 4000nm, from 2857 to 3226nm or approximately 3030nm. In one embodiment the viscous material is caramel and the infrared radiation has a peak wavelength of from 2500 to 4000nm.

In one embodiment the infrared source emits IR intermittently; it is switched on (to emit IR) and switched off (to stop emitting IR). The infrared source emits for a fixed period and then stops; this is known as a pulse. In one series of embodiments, a pulse lasts less than 5, 4, 3, 2, 1, 0.5, 0.2 or 0.1s. In one series of embodiments, a pulse lasts at least 0.05, 0.1, 0.2, 0.3, 0.4, 0.5, 1, 1.5, 2, 3, 4 or 5s. The timing may be better understood by the pulse rate, the number of pulses in a given period. In one series of embodiments, the pulse rate is at least 0.1, 0.25, 0.5, 1, 2, 3 or 4 pulses per second (Hz). In one series of embodiments, the pulse rate is less than 8, 6, 4, 3, 2,1, 0.5 or 0.25 pulses per second (Hz). In one embodiment the pulse rate is from 0.25 to 0.5Hz. A series of masses of confectionery material can be deposited where the pulse rate and the rate of depositing the masses is coordinated. The IR can be emitted to break the tail and then switched off whilst the next mass is deposited. This means that the mass is not subjected to heat at all.

In one embodiment the infrared source emits infrared radiation continuously. This means that both the tail and the mass will experience infrared radiation. There is no benefit to heating the mass but it might not be practical to switch the infrared source on and off. In any case the effect on the mass is minimal since it will only experience the infrared radiation briefly as it moves past the source and it has greater bulk than the tail. The tail is much thinner than the mass and will experience the infrared radiation for longer. Hence, even if the mass experiences some infrared radiation its temperature should remain unchanged.

In one embodiment the heat is infrared radiation from an infrared heater. Infrared heaters are commercially available, for example, from Heraeus Noblelight Ltd (UK). In one embodiment the infrared heater comprises a heating element selected from tungsten, carbon, iron, chromium, and aluminium. In one embodiment the heating element is operated at a temperature of at least 800, 1200, 1500, 2000 or 2000°C. In one embodiment the heating element is operated at a temperature of less than 2500, 2000, 1500 or 1000°C.

In one embodiment the infrared heater emits at a power density of at least 30, 40, 50, 60, 80 or 100kW/m$^2$.

In one embodiment the infrared source is an infrared heater. In one embodiment the infrared heater is a quartz glass infrared emitter. This infrared heater is advantageous since the emitted infrared can be matched to the absorption wavelength of the viscous confectionery material.

Short wave radiation penetrates deeply into some solid materials to ensure uniform heating. Medium wave radiation is absorbed mostly in the outer surface.

In one embodiment the infrared heater is a short wave (also known as near infrared) emitter, by which we mean that the peak infrared emission is in the range from 800 to 1400nm.

In one embodiment the infrared heater is a medium infrared emitter, by which we mean that the peak infrared emission is in the range from 1400 to 3000nm.

In one embodiment the infrared heater is a far infrared emitter (also known as dark emitter), by which we mean that the peak infrared emission is in the range from 3000nm to 1mm.

In one embodiment the portion of the tail is subjected to heat by means of a laser, such as an infrared laser. A laser beam is produced by a laser such as a gas laser or a solid state laser.

In one embodiment the surface is a mould. In this way, the viscous confectionery material takes on the shape of the mould.

In one embodiment the mould is a silicone mould or a polycarbonate mould.

In one embodiment the mould is an edible shell e.g. a chocolate shell. i.e. the viscous confectionery material is deposited from the nozzle into the edible shell. In one such embodiment, the process additionally comprises enclosing the viscous confectionery material within the edible shell. Typically this will be achieved by backing off the shell with further edible material such as chocolate.

The process is particularly beneficial when the mould is a chocolate shell. In some conventional processes for depositing thick caramel in chocolate shells, the caramel is deposited at a temperature of at least 50°C to avoid tailing and thereby requires subsequent cooling to prevent the caramel from melting the chocolate shell.

In one embodiment the surface is a planar surface such as a conveyer belt. In this way, the viscous confectionery material spreads out on the planar surface rather than being confined by a mould.

In one embodiment the process does not employ a subsequent cooling step to cool the viscous material (i.e. subjecting the product to a temperature below ambient temperature). In conventional processes, the viscous material is heated to avoid tailing and is often cooled afterward. Such a step is unnecessary since the mass of viscous confectionery material remains unheated.

In this invention, the term "viscous" for the viscous confectionery material, means a filling which is pumpable at the time it is deposited. It may also be flowable or pourable and may be a liquid or a semi-liquid with a minimum viscosity of 0.05Pa.s at 30°C, i.e. the viscosity of cocoa butter at 30°C. The viscosity may be of Newtonian or Non-Newtonian type

In one embodiment the viscous confectionery material is liquid at standard temperature and pressure (SATP, 25°C 100kPa). In an alternative embodiment the viscous confectionery material is solid at SATP.

In one embodiment the viscous confectionery material is selected from one or more of caramel (including toffee and butterscotch), a gel such as Turkish delight, a nougat, a fondant or a marzipan.

In one embodiment the viscous confectionery material comprises a bulk sweetener. Suitable bulk sweeteners include sugars (e.g. sucrose, dextrose, glucose, fructose, lactose, trehalose and maltose and any combination thereof including honey), sugar-substitutes or combinations thereof. Suitable sugar substitutes include sugar alcohols (e.g. sorbitol, xylitol, mannitol, lactitol, isomalt, maltitol). In one embodiment the viscous confectionery material comprises one or more intense sweeteners (e.g. aspartame, acesulfame-K, cyclamates, saccharin, sucralose, neohesperidin, dihydrochalone, alitame, stena sweeteners and glycyrrhizin).

In one embodiment the viscous confectionery material is caramel. A typical caramel comprises water, sweetener (e.g. sugar), milk solids and fat (e.g. vegetable fat). In one embodiment the caramel comprises from 10 to 20wt% water, from 50 to 80wt% sweetener, from 5 to 15wt% milk solids, and from 8 to 20wt% fat.

In one series of embodiments the viscous confectionery material has a viscosity at 30°C or at the temperature at which it is deposited of at least 0.1, 0.5, 1, 5, 10, 15, 20, 30, 40, 50, 60 70, 80, 90 or 100 Pas. In one series of embodiments the viscous confectionery material has a viscosity at 30°C or at the temperature at which it is deposited of less than 1000, 800, 600, 400, 200, 150, 100, 75, 60 or 50 Pas.

In one series of embodiments the viscous confectionery material has a viscosity at 60°C of at least 20 Pas at $2s^{-1}$, of at least 19Pas at $5s^{-1}$, of at least 17Pas at $10s^{-1}$ and/or at least 15Pas at $15s^{-1}$. In one series of embodiments the viscous confectionery material has a viscosity at 60°C of less than 25Pas at $2s^{-1}$, of less than 22Pas at $5s^{-1}$, of less than 20Pas at $10s^{-1}$ and/or less than 19 Pas at $15s^{-1}$.

In one embodiment the edible shell comprises chocolate such as a dark chocolate, a milk chocolate or a white chocolate. In a particular embodiment the edible shell is a chocolate shell.

The term "chocolate" in the context of the present invention is not restricted by the various definitions of chocolate provided by government and regulatory bodies. A chocolate is simply a product that contains a fat phase and which is obtained from cocoa products and sweeteners.

In one embodiment the edible shell comprises chocolate, said chocolate comprising at least one fat selected from cocoa butter, butterfat, a cocoa butter equivalent (CBE), a cocoa butter substitute (CBS), a vegetable fat that is liquid at standard ambient temperature and pressure (SATP, 25°C and 100kPa) or any combination of the above. In a particular embodiment, the chocolate comprises cocoa butter.

CBEs are defined in Directive 2000/36/EC. Suitable CBEs include illipe, Borneo tallow, tengkawang, palm oil, sal, shea, kokum gurgi and mango kernel. CBE's are usually used in combination with cocoa butter. In one embodiment, the chocolate shell material comprises no more than 5wt% CBE's.

Chocolate may comprise a cocoa butter substitute (CBS) (sometimes known as a cocoa butter replacer, CBR) in place of some or all of the cocoa butter. Such chocolate materials are sometimes known as compound chocolate. Suitable CBS's include CBS laurics and CBS non-laurics. CBS laurics are short-chain fatty acid glycerides. Their physical properties vary but they all have triglyceride configurations that make them compatible with cocoa butter. Suitable CBS's include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS nonlaurics include soya, cottonseed, peanut, rapeseed and corn (maize) oil.

According to a second aspect of the present invention there is provided a system of apparatus comprising
a depositor having at least ten nozzles each nozzle configured to deposit a viscous confectionery material;
a surface for receiving the viscous confectionery material; and

a heat source;

the surface being located vertically below the at least ten nozzles such that the viscous confectionery material may fall onto the surface so as to form a mass and a tail linking the nozzle and the mass;

wherein the heat source is arranged to heat at least a portion of each tail between each of the at least ten nozzles and the masses.

In one embodiment the depositor comprises at least 10 nozzles. In one such embodiment the heat source is arranged to heat at least a portion of the space between each of the at least 10 nozzles and the surface.

In one embodiment the heat source is an infrared source such as an infrared heater or an infrared laser. In one embodiment the heat source is a laser.

The invention will now be described with reference to the following figure(s) in which

Fig 1 is a reference FT-IR spectrum for a conventional caramel with absorption (%T) plotted against wave number (cm-1); and

Fig 2 is a schematic diagram of a process and apparatus in accordance with an embodiment of the invention.

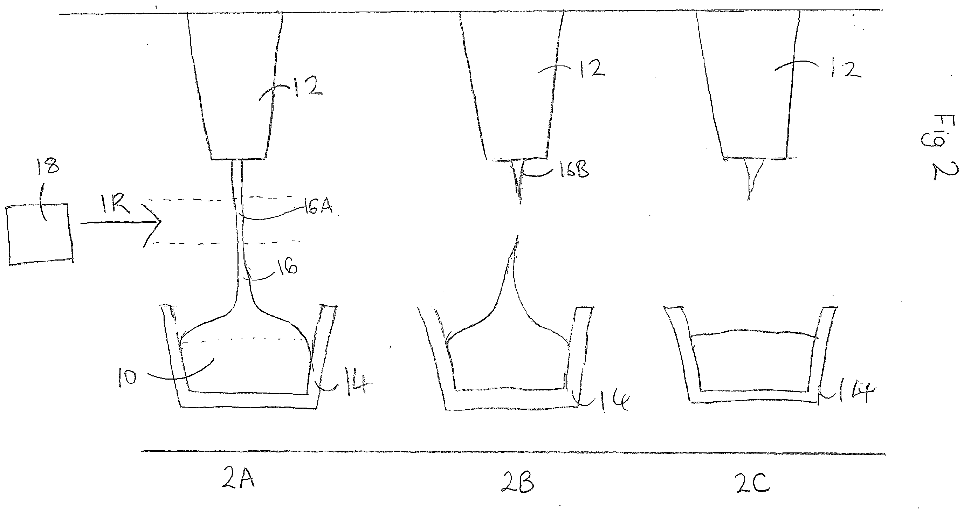

Referring to figure 2 a mass of caramel (a viscous filling) 10 is being deposited from a nozzle 12 into a chocolate shell 14. The nozzle 12 is one of a series in a depositor (not shown). Referring to figure 2A, the caramel extends in a long string or "tail" 16 from the nozzle 12 to the mass 10 in the chocolate shell 14. Infrared radiation (IR) is emitted from a heater 18 and applied to a portion 16A of the caramel tail (after it has left the nozzle 12 but before it enters the shell 14); the IR is not applied within the nozzle 12 or within the shell 14 so the mass 10 remains unheated. The IR increases the temperature of the portion of the caramel tail 16A and thereby decreases its viscosity so that the "tail" breaks, as shown in figure 2B. Part 16B of the caramel tail remains suspended from the nozzle 12 and the remainder falls into the shell 14 as shown in figure 2C. The chocolate shell 14 can then be backed off with further chocolate in the conventional manner to completely enclose the caramel filling.

METHODOLOGY

A conventional caramel was employed (e.g. the caramel used in CADBURY DAIRY MILK CARAMEL (RTM)). The caramel had a density of 1350kg/m$^3$ and a specific heat capacity of 2390J/kg.K. The viscosity of the caramel was measured at 55°C and 60°C using a Bohlin (RTM) viscometer. The sample was melted, transferred into a concentric cylinder system of rotational viscometer and pre-sheared (2s$^{-1}$) to bring it to equilibrium and to ensure a uniform mass and temperature. The sample was then subjected to defined shear rates. The shear stress was measured and from this the apparent viscosity is calculated at given shear rates:

| Shear rate (1/s) | Viscosity at 55°C (Pas) | Viscosity at 60°C (Pas) |
|---|---|---|
| 2.0 | 33.161 | 20.96 |
| 3.1 | 32.348 | 20.32 |
| 3.7 | 31.908 | 19.92 |
| 5.0 | 31.548 | 19.61 |
| 6.9 | 30.905 | 19.18 |
| 9.9 | 30.383 | 18.80 |
| 14.5 | 29.648 | 18.37 |
| 14.5 | 29.626 | 18.34 |
| 9.9 | 30.208 | 18.69 |
| 6.9 | 30.662 | 18.94 |
| 5.0 | 30.756 | 19.29 |
| 3.7 | 31.63 | 19.58 |
| 3.1 | 31.874 | 19.94 |
| 2.0 | 32.392 | 20.44 |

As expected, the caramel is more viscous at 55°C than at 60°C. The viscosity changes slightly with shear rate i.e. non-Newtonian behaviour.

Example 1

A chocolate shell comprising a caramel filling was prepared using the process illustrated in figure 1. The caramel was stored in a depositor at a temperature of 30°C and then deposited through a nozzle into the chocolate shell. The caramel is highly viscous at this temperature so formed a tail between the nozzle and the mass in the shell. The tail diameter was estimated to be 0.0001m (0.1mm).

An infrared heater was employed to emit infrared radiation at a power density of 40000W/m$^2$ for a period of 0.5 seconds. The infrared radiation was focussed on a small portion of the caramel tail (approximately 0.001m (1mm)) and caused the tail to break. The tail fell within the chocolate shell which was subsequently backed off to seal the unit.

Example 2

A chocolate shell comprising a caramel filling was prepared using a variant of the process illustrated in figure 1, where a LASER is employed in place of the infrared heater. The caramel was stored in a depositor at a temperature of 25°C and then deposited through a nozzle into the chocolate shell. A tail formed between the nozzle and the mass in the shell. The tail diameter was estimated to be 0.8mm. The LASER was applied for a period of 50ms and caused the tail to break. The tail fell within the chocolate shell which was subsequently backed off to seal the unit.

**Claims**

1.  A process for the preparation of a confectionery product comprising depositing a viscous confectionery material from a nozzle (12) onto a surface, a bulk of the viscous confectionery material forming a mass and a remainder of the viscous confectionery material forming a tail (16) linking the nozzle (12) and the mass (10);
    wherein at least a portion of the tail (16A) is subjected to heat after deposition so as to break the tail (16) and thereby separate the mass (10) from the nozzle (12),
    and wherein the portion of the tail is subjected to heat (16A) in the form of infrared radiation from an infrared source (18).

2.  The process of claim 1, wherein the tail (16) has a length of from 2 to 20cm.

3.  The process of claim 1 or claim 2, wherein the portion of the tail that is subjected to heat (16A) has a length of less than 10mm and/or wherein the portion of the tail that is subjected to heat (16A) forms less than 10% of the length of the tail.

4.  The process of any one of the preceding claims, wherein the portion of the tail that is subjected to heat (16A) is located closer to the nozzle (12) than to the mass (10).

5.  The process of any one of the preceding claims, wherein the viscous confectionery material has a temperature of less than 35°C when it is deposited from the nozzle (12).

6.  The process of any one of the preceding claims, wherein the portion of the tail (16A) is subjected to heat to increase its temperature to at least 50°C and/or
    wherein the portion of the tail (16A) is subjected to heat to increase its temperature by at least 15°C relative to the temperature at which the viscous confectionery mass is deposited.

7.  The process of any one of the preceding claims, wherein the infrared source (18), is an infrared heater or an infrared laser.

8.  The process of any one of the preceding claims, wherein the infrared source (18) is located such that it emits radiation onto the tail (16) but not onto the mass (10).

9.  The process of any one of the preceding claims, wherein the infrared source (18) emits infrared radiation intermittently.

10. The process of any one of the preceding claims, wherein the infrared radiation has a wavelength of from 2500 to 4000nm.

**11.** The process of any one of the preceding claims, wherein the surface is an edible mould.

**12.** The process of claim 11, wherein the edible mould is a chocolate shell (14).

**13.** The process of any one of the preceding claims, wherein the viscous confectionery material is selected from one or more of caramel, a gel such as Turkish delight, a nougat, a fondant or a marzipan.

**14.** A system of apparatus comprising
a depositor having at least ten nozzles (12) each nozzle (12) configured to deposit a viscous confectionery material;
a surface for receiving the viscous confectionery material; and
an infrared heat source (18);
the surface being located vertically below the at least ten nozzles (12) such that the viscous confectionery material may fall onto the surface so as to form a mass (10) and a tail (16) linking the nozzle (12) and the mass (10);
wherein the infrared heat source (18) is arranged to heat at least a portion of each tail (16A) between each of the at least ten nozzles (12) and the masses.

**15.** The system of claim 14, wherein the infrared heat source (18) is an infrared heater or an infrared laser.

**Patentansprüche**

**1.** Verfahren zur Zubereitung eines Süßwarenartikels, das Folgendes umfasst:

Absetzen eines viskosen Süßwarenmaterials aus einer Düse (12) auf eine Oberfläche, wobei ein Großteil des viskosen Süßwarenmaterials eine Masse bildet und ein Rest des viskosen Süßwarenmaterials einen Schwanz (16) bildet, der die Düse (12) und die Masse (10) verbindet,
wobei wenigstens ein Abschnitt des Schwanzes nach dem Absetzen Wärme (16A) ausgesetzt wird, um so den Schwanz (16) zu unterbrechen und dadurch die Masse (10) von der Düse (12) zu trennen,
und wobei der Abschnitt des Schwanzes (16A) Wärme in der Form von Infrarotstrahlung von einer Infrarotquelle (18) ausgesetzt wird.

**2.** Verfahren nach Anspruch 1, wobei der Schwanz (16) eine Länge von 2 bis 20 cm hat.

**3.** Verfahren nach Anspruch 1 oder Anspruch 2, wobei der Abschnitt des Schwanzes, der Wärme (16A) ausgesetzt wird, eine Länge von weniger als 10 mm hat und/oder wobei der Abschnitt des Schwanzes, der Wärme (16A) ausgesetzt wird, weniger als 10 % der Länge des Schwanzes bildet.

**4.** Verfahren nach einem der vorhergehenden Ansprüche, wobei der Abschnitt des Schwanzes, der Wärme (16A) ausgesetzt wird, näher zu der Düse (12) als zu der Masse (10) angeordnet ist.

**5.** Verfahren nach einem der vorhergehenden Ansprüche, wobei das viskose Süßwarenmaterial eine Temperatur von weniger als 35°C hat, wenn es aus der Düse (12) abgesetzt wird.

**6.** Verfahren nach einem der vorhergehenden Ansprüche, wobei der Abschnitt des Schwanzes (16A) Wärme ausgesetzt wird, um seine Temperatur auf wenigstens 50°C zu steigern, und/oder wobei der Abschnitt des Schwanzes (16A) Wärme ausgesetzt wird, um seine Temperatur um wenigstens 15°C im Verhältnis zu der Temperatur zu steigern, bei der die viskose Süßwarenmasse abgesetzt wird.

**7.** Verfahren nach einem der vorhergehenden Ansprüche, wobei die Infrarotquelle (18) ein Infrarotheizer oder ein Infrarotlaser ist.

**8.** Verfahren nach einem der vorhergehenden Ansprüche, wobei die Infrarotquelle (18) derart angeordnet ist, dass sie Strahlung auf den Schwanz (16), aber nicht auf die Masse (10), abstrahlt.

**9.** Verfahren nach einem der vorhergehenden Ansprüche, wobei die Infrarotquelle (18) Infrarotstrahlung mit Unterbrechungen abstrahlt.

**10.** Verfahren nach einem der vorhergehenden Ansprüche, wobei die Infrarotstrahlung eine Wellenlänge von 2500 bis 400 nm hat.

**11.** Verfahren nach einem der vorhergehenden Ansprüche, wobei die Oberfläche eine essbare Form ist.

**12.** Verfahren nach Anspruch 1, wobei die essbare Form eine Schokoladenschale (14) ist.

**13.** Verfahren nach einem der vorhergehenden Ansprüche, wobei das viskose Süßwarenmaterial ausgewählt ist aus einem oder mehreren von Karamell, einem Gel, wie beispielsweise Lokum, einem Nougat, einem Fondant oder einem Marzipan.

**14.** Vorrichtungssystem, das Folgendes umfasst:

eine Absetzvorrichtung, die wenigstens zehn Düsen (12) hat, wobei jede Düse (12) dafür konfiguriert ist, ein viskoses Süßwarenmaterial abzusetzen,
eine Oberfläche zum Aufnehmen des viskosen Süßwarenmaterials und
eine Infrarot-Wärmequelle (18),
wobei die Oberfläche derart vertikal unterhalb der wenigstens zehn Düsen (12) angeordnet ist, dass das viskose Süßwarenmaterial auf die Oberfläche fallen kann, um so eine Masse (10) und einen Schwanz (16), der die Düse (12) und die Masse (10) verbindet, zu bilden,
wobei die Infrarot-Wärmequelle (18) dafür angeordnet ist, wenigstens einen Abschnitt jedes Schwanzes (16A) zwischen jeder der wenigstens zehn Düsen (12) und den Massen zu erwärmen.

**15.** System nach Anspruch 14, wobei die Infrarot-Wärmequelle (18) ein Infrarotheizer oder ein Infrarotlaser ist.

## Revendications

**1.** Procédé pour la préparation d'un produit de confiserie comprenant :

le dépôt d'un matériau de confiserie visqueux qui provient d'un éjecteur (12) sur une surface, une quantité majeure du matériau de confiserie visqueux formant une masse et un reste du matériau de confiserie visqueux formant une traînée (16) qui relie l'éjecteur (12) et la masse (10) ;
dans lequel au moins une partie de la traînée (16A) est soumise à de la chaleur après dépôt de manière à rompre la traînée (16) et à ainsi séparer la masse (10) de l'éjecteur (12) ;
et dans lequel la partie de la traînée est soumise à de la chaleur (16A) sous la forme d'un rayonnement infrarouge qui provient d'une source infrarouge (18).

**2.** Procédé selon la revendication 1, dans lequel la traînée (16) présente une longueur qui va de 2 à 20 cm.

**3.** Procédé selon la revendication 1 ou la revendication 2, dans lequel la partie de la traînée qui est soumise à la chaleur (16A) présente une longueur inférieure à 10 mm et/ou dans lequel la partie de la traînée qui est soumise à la chaleur (16A) forme moins de 10 % de la longueur de la traînée.

**4.** Procédé selon l'une quelconque des revendications qui précèdent, dans lequel la partie de la traînée qui est soumise à la chaleur (16A) est située plus près de l'éjecteur (12) qu'elle ne l'est de la masse (10).

**5.** Procédé selon l'une quelconque des revendications qui précèdent, dans lequel le matériau de confiserie visqueux présente une température inférieure à 35° C lorsqu'il est déposé depuis l'éjecteur (12).

**6.** Procédé selon l'une quelconque des revendications qui précèdent, dans lequel la partie de la traînée (16A) est soumise à la chaleur de manière à augmenter sa température jusqu'à au moins 50° C et/ou dans lequel la partie de la traînée (16A) est soumise à la chaleur de manière à augmenter sa température d'au moins 15° C par rapport à la température à laquelle la masse de confiserie visqueuse est déposée.

**7.** Procédé selon l'une quelconque des revendications qui précèdent, dans lequel la source infrarouge (18) est un moyen de chauffage infrarouge ou un laser infrarouge.

**8.** Procédé selon l'une quelconque des revendications qui précèdent, dans lequel la source infrarouge (18) est placée de telle sorte qu'elle émette un rayonnement sur la traînée (16) mais pas sur la masse (10).

9. Procédé selon l'une quelconque des revendications qui précèdent, dans lequel la source infrarouge (18) émet un rayonnement infrarouge par intermittence.

10. Procédé selon l'une quelconque des revendications qui précèdent, dans lequel le rayonnement infrarouge présente une longueur d'onde de 2500 à 4000 nm.

11. Procédé selon l'une quelconque des revendications qui précèdent, dans lequel la surface est un moule comestible.

12. Procédé selon la revendication 11, dans lequel le moule comestible est une coque en chocolat (14).

13. Procédé selon l'une quelconque des revendications qui précèdent, dans lequel le matériau de confiserie visqueux est sélectionné parmi un ou plusieurs parmi du caramel, un gel tel qu'un loukoum, un nougat, un fondant et un massepain.

14. Système d'appareil comprenant :

un moyen de dépôt qui comporte au moins dix éjecteurs (12), chaque éjecteur (12) étant configuré de manière à ce qu'il dépose un matériau de confiserie visqueux ;
une surface pour recevoir le matériau de confiserie visqueux ; et
une source de chaleur infrarouge (18) ;
la surface étant placée verticalement au-dessous des au moins dix éjecteurs (12) de telle sorte que le matériau de confiserie visqueux puisse tomber sur la surface de manière à ce qu'il forme une masse (10) et une traînée (16) qui relie l'éjecteur (12) et la masse (10) ;
dans lequel la source de chaleur infrarouge (18) est agencée de manière à ce qu'elle chauffe au moins une partie de chaque traînée (16A) entre chacun des au moins dix éjecteurs (12) et les masses.

15. Système selon la revendication 14, dans lequel la source de chaleur infrarouge (18) est un moyen de chauffage infrarouge ou un laser infrarouge.

Fig 1

Fig 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5102599 A
- WO 0041929 A
- WO 0249447 A
- WO 2005077547 A
- GB 2026378 A